# EUROPEAN PATENT APPLICATION

(11) **EP 4 321 919 A1**
(43) Date of publication of application: **14.02.2024**
(21) Application number: 23191085.2
(22) Date of filing: 11.08.2023
(51) Int. Cl.: G02B 21/36, G02B 27/00

(54) **PHASE ENGINEERING AND COMPUTATIONAL RECOVERY FOR SPATIAL 'OMICS**

(30) Priority: 11.08.2022 US 202263371193 P; 13.01.2023 US 202363479908 P; 10.08.2023 US 202318448002
(71) Applicant: Double Helix Optics Inc., Boulder, CO 80303 (US)
(72) Inventor: AGRAWAL, Anurag, Ft. Collins (US); COLOMB, Warren, Arvada (US); GAUMER, Scott, Greenbrae (US)
(74) Representative: Forresters IP LLP

(57) **Abstract**

An optical system may include an objective lens, a camera, and an optical element. The objective lens may include a back focal plane. The camera may capture an image representative of a biological sample. The optical element may be optically coupled to the back focal plane. The optical element may extend a depth of field defined by the objective lens and maintain light throughput to permit the camera to capture the image representative of the biological sample within the extended depth of field.

## Description

### CROSS-REFERENCE TO RELATED APPLICATION

This patent application claims the benefit of and priority to U.S. Non-provisional App. No. 18/448,002 filed August 10, 2023, U.S. Provisional App. No. 63/371,193 filed August 11, 2022, titled "PHASE ENGINEERING AND COMPUTATIONAL RECOVERY FOR SPATIAL 'OMICS" and to U.S. Provisional App. No. 63/479,908 filed January 13, 2023, titled "METHOD OF USING PHASE ENGINEERING AND COMPUTATIONAL RECOVERY FOR SPATIAL 'OMICS," each of which are incorporated in the present disclosure by reference in its entirety.

### FIELD

The embodiments discussed in the present disclosure are related to a method of using phase engineering and computational recovery for spatial `omics.

### BACKGROUND

Unless otherwise indicated in the present disclosure, the materials described in the present disclosure are not prior art to the claims in the present application and are not admitted to be prior art by inclusion in this section.

In spatial `omics applications (e.g., genomics, transcriptomics, proteomics, metabolomics, etc.), spatial organization may describe biological networks. In these biological networks, sub-cellular components (e.g., proteins, Ribonucleic acid (RNA), Messenger RNA (mRNA), Deoxyribonucleic acid (DNA), etc.) may be influenced by a surrounding environment including other sub-cellular components. Additionally, spatial `omics is a powerful tool in cellular quantification and cellular phenotyping, and in the understanding of important mechanisms such as tissue organization or cell regulation by examination of a multitude of expression factors (e.g., mitosis, trafficking, morphology, chromaticity, density, etc.). An optical system (e.g., an optical microscope) may be implemented to capture data and/or images representative of a sample (e.g., a biological sample) in spatial `omics applications.

The subject matter claimed in the present disclosure is not limited to embodiments that solve any disadvantages or that operate only in environments such as those described above. Rather, this background is only provided to illustrate one example technology area where some embodiments described in the present disclosure may be practiced.

### SUMMARY

This Summary is provided to introduce a selection of concepts in a simplified form that are further described below in the Detailed Description. This Summary is not intended to identify key features or essential characteristics of the claimed subject matter, nor is it intended to be used as an aid in determining the scope of the claimed subject matter.

The invention is defined by the claims.

According to a first aspect of the present disclosure we provide an optical system comprising: an objective lens comprising a back focal plane; a camera configured to capture an image representative of a biological sample; and an optical element optically coupled to the back focal plane, the optical element configured to extend a depth of field defined by the objective lens and maintain light throughput to permit the camera to capture the image representative of the biological sample within the extended depth of field.

The optical system may further comprise a computing device communicatively coupled to the camera, the computing device configured to determine a location of tissue, cellular, or sub-cellular components within the biological sample, count a number of the components within the biological sample, or determine interactions of the components within the biological sample based on the image representative of the biological sample within the extended depth of field.

The optical element may comprise a non-traditional optics dielectric phase mask configured to modify a point spread function (PSF) of the optical system.

The optical element may be housed within the objective lens or may comprise a separate device physically attached to the objective lens.

The optical element may be configured to cause the extended depth of field to be greater than the depth of field defined by the objective lens.

The optical element may comprise a passive device with a fixed alignment.

The optical element may comprise a device that is based on at least one of the objective lens, a thickness of the biological sample, or a density of the tissue, cellular, or sub-cellular components within the biological sample.

The computing device may be configured to maintain or improve an image resolution defined by the objective lens.

The optical system may be configured to improve throughput of imaging or analysis of spatial 'omics sciences.

The optical system may further comprise: a tube lens configured to permit light from the biological sample to traverse the tube lens; and a reflector configured to re-direct light rays from the tube lens to the camera.

According to a second aspect of the present disclosure we provide a system comprising: one or more computer-readable storage media configured to store instructions; and one or more processors communicatively coupled to the one or more computer-readable storage media and configured to, in response to execution of the instructions, cause the system to perform operations, the operations comprising: receiving data representative of a biological sample within an extended depth of field; extracting information corresponding to tissue, cellular, or sub-cellular components within the biological sample within the extended depth of field from the data representative of the biological sample within the extended depth of field; and determining `omics information of the tissue, cellular, or sub-cellular components based on the extracted information.

The operation extracting the information corresponding to the tissue, cellular, or sub-cellular components may comprise at least one of: extracting a location of the components within the biological sample within the extended depth of field from the data representative of the biological sample within the extended depth of field; extracting a number of the components within the biological sample within the extended depth of field from the data representative of the biological sample within the extended depth of field; or extracting interactions of the components within the biological sample within the extended depth of field from the data representative of the biological sample within the extended depth of field.

The data representative of the biological sample within the extended depth of field may comprise a single image representative of the biological sample within the extended depth of field; and at least one of the locations of the tissue, cellular, or sub-cellular components, the number of the components, or the interactions of the components may be extracted from the single image representative of the biological sample within the extended depth of field.

The 'omics information may comprise at least one of locations of the tissue, cellular, or sub-cellular components, interactions of the components, a number of the components, densities of the components, clusters of the components, chromaticity of the components, brightness of the components, colocations of the components, trajectories of the components, or velocity of the components.

The extended depth of field may be defined by an objective lens and an optical element optically coupled to a back focal plane of the objective lens.

The system of the second aspect of the present disclosure may include one or more or all the features of the optical system according to the first aspect of the present disclosure.

According to a third aspect of the present disclosure we provide a method comprising: receiving data representative of a biological sample within an extended depth of field; extracting information corresponding to tissue, cellular, or sub-cellular components within the biological sample within the extended depth of field from the data representative of the biological sample within the extended depth of field; and determining `omics information based on the extracted information.

Extracting the information corresponding to the tissue, cellular, or sub-cellular components may comprise at least one of: extracting a location of the components within the biological sample within the extended depth of field from the data representative of the biological sample within the extended depth of field; extracting a number of the components within the biological sample within the extended depth of field from the data representative of the biological sample within the extended depth of field; or extracting interactions of the components within the biological sample within the extended depth of field from the data representative of the biological sample within the extended depth of field.

The data representative of the biological sample within the extended depth of field may comprise a single image representative of the biological sample within the extended depth of field; and at least one of the location of the tissue, cellular, or sub-cellular components, the number of the components, or the interactions of the components may be extracted from the single image representative of the biological sample within the extended depth of field.

The 'omics information may comprise at least one of locations of the tissue, cellular, or sub-cellular components, interactions of the components, densities of the components, clusters of the components, chromaticity of the components, brightness of the components, colocations of the components, trajectories of the components, or velocity of the components.

The extended depth of field may be defined by an objective lens and an optical element optically coupled to a back focal plane of the objective lens.

The method of the third aspect of the present disclosure may include one or more or all the features of the optical system according to the first aspect of the present disclosure and / or may include one or more or all the features of the optical system according to the second aspect of the present disclosure.

One or more embodiments of the present disclosure may include an optical system. The optical system may include an objective lens, a camera, and an optical element. The objective lens may include a back focal plane. The camera may capture an image representative of a biological sample. The optical element may be optically coupled to the back focal plane. The optical element may extend a depth of field defined by the objective lens and maintain light throughput to permit the camera to capture the image representative of the biological sample within the extended depth of field.

One or more embodiments of the present disclosure may include an optical system. The optical system may include an objective lens including a back focal plane. The optical system may also include a camera configured to capture an image representative of a biological sample. In addition, the optical system may include an optical element optically coupled to the back focal plane. The optical element may extend a depth of field defined by the objective lens and maintain light throughput to permit the camera to capture the image representative of the biological sample within the extended depth of field. Further, the optical system may include a computing device communicatively coupled to the camera. The computing device may determine a location of tissue, cellular, or sub-cellular components within the biological sample, count a number of the components within the biological sample, or determine interactions of the components within the biological sample based on the image representative of the biological sample within the extended depth of field.

One or more embodiments of the present disclosure may include a system including one or more computer-readable storage media configured to store instructions and one or more processors communicatively coupled to the one or more computer-readable storage media and configured to, in response to execution of the instructions, cause the system to perform operations. The operations may include receiving data representative of a biological sample within an extended depth of field. The operations may also include extracting information corresponding to tissue, cellular, or sub-cellular components within the biological sample within the extended depth of field from the data representative of the biological sample within the extended depth of field. In addition, the operations may include determining `omics information of the tissue, cellular, or sub-cellular components based on the extracted information.

One or more embodiment of the present disclosure may include a method. The method may include receiving data representative of a biological sample within an extended depth of field. The method may also include extracting information corresponding to tissue, cellular, or sub-cellular components within the biological sample within the extended depth of field from the data representative of the biological sample within the extended depth of field. In addition, the method may include determining `omics information based on the extracted information.

The object and advantages of the embodiments will be realized and achieved at least by the elements, features, and combinations particularly pointed out in the claims. Both the foregoing general description and the following detailed description are exemplary and explanatory and are not restrictive.

### BRIEF DESCRIPTION OF THE DRAWINGS

Example embodiments will be described and explained with additional specificity and detail through the use of the accompanying drawings in which:
FIG. 1 illustrates an example optical system;
FIG. 2 illustrates another example optical system that includes an optical lens that includes an optical element;
FIG. 3 illustrates yet another example optical system that includes the optical lens that includes the optical element;
FIG. 4 illustrates graphical representations of simulations of a point spread function (PSF) of an optical system that included the optical element of FIGS. 2 and 3 and an optical system that did not include the optical element of FIGS. 2 and 3;
FIG. 5 illustrates graphical representations of more simulations of the PSF of an optical system that included the optical element of FIGS. 2 and 3 and an optical system that did not include the optical element of FIGS. 2 and 3;
FIG. 6 illustrates graphical representations of even more simulations of the PSF of an optical system that includes the optical element of FIGS. 2 and 3 and an optical system that does not include the optical element of FIGS. 2 and 3;
FIG. 7 illustrates graphical representations of simulations using a microscope that does not include the optical element of FIGS. 2 and 3 and graphical representations of simulations using a microscope that includes the optical element of FIGS. 2 and 3;
FIG. 8 illustrates flowcharts of a workflow and images captured using a standard objective lens and a workflow and an image captured using a DF objective lens; and
FIG. 9 illustrates a flowchart of an example method of determining `omics information of tissue, cellular, or sub-cellular components;
FIG. 10 illustrates a block diagram of an example computing system;
all according to at least one embodiment described in the present disclosure.

### DETAILED DESCRIPTION

An optical system (e.g., an optical microscope) may include an objective lens that defines an image resolution, a magnification, a lateral field of view, a depth of field, or some combination thereof to capture data and/or images representative of the sample. A computing device may use the data and/or the images to determine information about the biological networks. For example, the computing device may determine a role of a genome's three-dimensional (3D) organization in regulation of transcription and/or other cellular functions.

Spatially resolved transcriptomics may greatly expand the knowledge and understanding of complex multicellular biological networks. Spatially resolved transcriptomics may combine gene expression data with spatial information. The gene expression data and the spatial information may be obtained using one or more of various methods. One or more of these methods may include sample chemistry and may be tissue-type dependent.

Some objective lenses may be designed in accordance with Gaussian optics design principles to define an image resolution, a magnification, a lateral field of view, a depth of field, or some combination thereof to capture an image. These objective lenses may be designed to operate using a highest possible resolution and highest image quality only at a nominal focal plane. If the sample's axial dimension is greater than (i.e., extends outside) the depth of field associated with this nominal focal plane, the data and/or images that are obtained of the sample may include errors (e.g., may be out of focus or incomplete). In addition, these objective lenses may include intrinsic tradeoffs. For example, these objective lenses may provide a higher image resolution (e.g., include a higher numerical aperture (NA)) while providing a lower depth of field. As another example, these objective lenses may provide a lower image resolution (e.g., include a lower NA) while providing a greater depth of field. Objective lenses designed in accordance with Gaussian optics design may be unable to simultaneously provide both a higher image resolution and a greater depth of field.

The tradeoff between the resolution and the depth of field of these objective lenses may become more pronounced as the NA of the objective lenses increases due to a quadratic dependence of the depth of field on the NA. As an example, the depth of field of a 0.95 NA air objective lens at an emission wavelength of six hundred seventy nanometers (nm) may be equal to roughly 0.8 micrometers (µm). The depth of field of the 0.95 NA air objective lens may be defined by a full width at half maximum (FWHM) of a peak intensity of a PSF when measured as a function of defocus. The PSF may include an impulse response of the optical system to a point source.

Some samples in image-based spatial `omics applications are thicker than the depth of field of these objective lenses (e.g., thicker than 0.8 µm). For example, cells within the sample may be equal to or greater than two µm and sections of the sample may be equal to or greater than ten µm. Furthermore, due to the limited depth of field of these objective lenses, small imperfections on a surface of a coverslip, a petri dish, a silicon surface, a multi-well imaging plate, or other surface that the sample is physically positioned on may cause focus deviations that are greater than the depth of field, which may cause the sample to be out of focus in the image.

Some optical systems that include these objective lenses may perform axial scanning to generate a combined image of a sample that is greater than the depth of field. Axial scanning may include the process of stepping through focus of the objective lens (e.g., stepping through focus in a Z axis away or toward the objective lens) and capturing images of different portions of the sample at each axial step. The computing device may combine images together in post processing to generate the combined image.

To generate the combined image of the sample using axial scanning, each axial step may be made in accordance with a Nyquist sampling rate. The Nyquist sampling rate may be equal to roughly half the depth of field of the corresponding objective lens. For example, the Nyquist sampling rate for the 0.95 NA air objective lens may be roughly equal to four hundred nm. Thus, ten or more axial steps may be performed for the optical system including the 0.95 NA air objective lens to capture the images to generate the combined image of a typical four µm sample.

Some optical systems may implement a feedback loop or other mechanical system to perform axial scanning. These optical systems may experience a settling time as the optical system performs each axial step. These optical systems may experience mechanical errors, positional errors, or some combination thereof moving between one or more axial steps. These errors may increase an amount of time the optical system takes to capture the images to generate the combined image. To try and avoid these errors, these optical systems may introduce a delay between each axial step. The delay between the axial steps may reduce a frame rate of the optical system, increase the amount of time to capture the images to generate the combined image, or some combination thereof.

These optical systems may also increase an amount of data to be captured, stored, processed, or some combination thereof due to multiple images being captured and combined to generate the combined image. The increased data may introduce delays experienced by these optical systems by increasing an amount of time to process the increased data (e.g., may increase an extensiveness of labor, scale of the data, throughput of the data, or some combination thereof).

Delays experienced by these optical systems may increase an experiment time (e.g., an amount of time to determine the spatial organization of the sample). For example, these optical systems may increase the experiment time between fifty to one hundred percent compared to an optical system that captures an image of the sample that is equal to or smaller than the depth of field.

Some optical systems may include a spatial light modulator or a binary mask pattern optically coupled to the objective lens to extend the depth of field. Spatial light modulators have drawbacks in regard to polarization dependence, pixel size, phase modulation variance, phase and amplitude efficiency, and the like. Spatial light modulators are also limited to only diffractive phase elements. The binary phase pattern creates a null in a modulation transfer function (MTF) at lower spatial frequencies for the optical system, reducing the image resolution to a level that is below a computational recovery level to capture a useful image. In addition, the binary pattern may also be sensitive to system aberrations.

Some embodiments described in the present disclosure may include an optical element to extend the depth of field while maintaining the image resolution defined by the objective lens. Some embodiments described in the present disclosure may overcome the tradeoffs between the depth of field and the image resolution of the objective lens.

For example, in some embodiments, an optical system may include the optical element (e.g., a dielectric phase mask) optically coupled to a back focal plane of the objective lens of the optical system. The optical element may extend the depth of field of the objective lens while maintaining the image resolution of the objective lens. The optical element may be matched to `omics problems of locating, counting, and/or determining the interactions of the sub-cellular components within the sample. For example, the optical element may be designed based on known characteristics of the objective lens, the sample, or some combination thereof.

The optical element may be designed to match the PSF of the objective lens and the optical element to a thickness of the sample, a density of the sample, or some combination thereof. The optical element may alter an optical response of the optical system by positioning a phase mask in the back focal plane. In addition, a computational recovery algorithm may be applied to the image that is captured using the optical element to extract spatial `omics data.

Alternatively or additionally, in some embodiments, the objective lens may include a back focal plane to which the optical element is optically coupled. The camera may be configured to capture an image representative of the sample within the depth of field defined by the objective lens. The optical element may be configured to extend the depth of field defined by the objective lens and substantially maintain light throughput to permit the camera to capture the image representative of the sample within the extended depth of field.

One or more embodiments described in the present disclosure may enhance 'omics information recovery, reduce an amount time for acquisition of 'omics information, reduce a size of data sets for analysis, improve existing instrumentation, enhance an image volume, or some combination thereof. In addition, one or more embodiments described in the present disclosure may reduce an amount of time to extract 'omics information from collected data, which may improve the throughput and speed of use of the optical system.

The optical element may reduce or eliminate the use of axial scanning to capture images of different portions of the sample with an axial dimension that is greater than the depth of field defined by the objective lens. The optical element may also increase a sample volume and/or a density of information captured in a single image without using axial scanning. In some embodiments, the optical element may provide twenty times as much information in a single image than an optical system that does not include the optical element. In addition, the optical element may maintain the image resolution (e.g., lateral resolution) over the extended depth of field.

The optical element may reduce the experiment time compared to an optical system using axial scanning. For example, the optical element may permit the computing device to determine a number of fluorescing sub-cellular components (e.g., particles), a location of the sub-cellular components, a brightness of the sub-cellular components, and other key attributes of the sub-cellular components at an increased rate and with enhanced recovery compared to an optical system that performed axial scanning since a given axial range may be imaged with fewer images. In addition, the optical element may permit moving parts to be removed from the optical system, because the optical system does not perform axial steps, which may reduce a cost of the optical system, a number of failure modes of the optical system, or some combination thereof.

The optical system including the optical element may increase a focal volume to capture more sample information related to the sample in a single image. Increasing the focal volume may ensure that the sample stays in focus to reduce or eliminate the use of electro-mechanical parts (e.g., autofocus stages and/or autofocus algorithms). The reduction or elimination of electro-mechanical parts may reduce a number of possible failure modes of the optical system. Furthermore, the optical system may include the optical element with a fixed alignment (e.g., fully encased in or attached to an objective lens) to further improve reliability of the optical system. In some embodiments, the optical element may comprise a passive device with the fixed alignment.

The optical element may be configured to interface with (e.g., optically couple to a back focal plane and physically attach to) standard microscope systems (e.g., existing system architectures).

These and other embodiments of the present disclosure will be explained with reference to the accompanying figures. It is to be understood that the figures are diagrammatic and schematic representations of such example embodiments, and are not limiting, nor are they necessarily drawn to scale. In the figures, features with like numbers indicate like structure and function unless described otherwise.

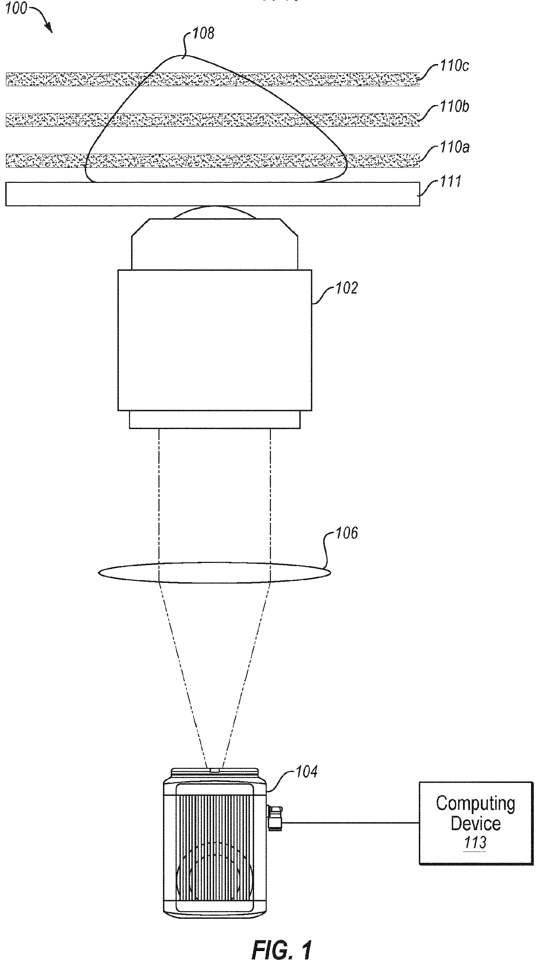

FIG. 1 illustrates an example optical system 100, in accordance with at least one embodiment described in the present disclosure. The optical system 100 may be configured to extract `omics information corresponding to a sample 108 within depths of field 110a-c. The optical system 100 may include an objective lens 102, a camera 104, a tube lens 106, a dish 111, and a computing device 113. The sample 108 may be physically positioned on the dish 111 (e.g., a coverslip, a petri dish, or a multi-well imaging plate). The objective lens 102 may include a µ-SPINDLE, a SPINDLE/SPINDLE², a 4F relay lens, or any other appropriate lens.

Light rays from the sample 108 may traverse the dish 111, the objective lens 102, and the tube lens 106 and be captured by a camera sensor within the camera 104 as an image. The light rays from the sample 108 may include reflected light rays (e.g., light rays reflected by the sample 108), transmitted light rays (e.g., light rays transmitted through the sample 108), fluorescence light rays (e.g., light rays emitted from the sample 108 via fluorescence), and/or other light rays which may be used to image the sample 108. Characteristics of the image captured by the camera 104 may be based on the image resolution, the magnification, the lateral field of view, the depth of field, or other aspects defined by the optical system 100.

As illustrated in FIG. 1, each of the depths of field 110a-c are smaller in an axial direction than an axial dimension of the sample 108. Thus, the optical system 100 may perform axial scanning to capture images representative of portions of the sample 108 within the different depths of field 110a-c. For example, during a first axial step, the camera 104 may capture a first image representative of a first portion of the sample 108 within the first depth of field 110a. As another example, during a second axial step, the camera 104 may capture a second image representative of a second portion of the sample 108 within the second depth of field 110b. As yet another example, during a third axial step, the camera 104 may capture a third image representative of a third portion of the sample 108 within the third depth of field 110c.

The computing device 113 may receive the images corresponding to the different depths of field 110a-c captured by the camera 104 (e.g., the first image, the second image, and the third image). The computing device 113 may process and combine the images together to generate a combined image representative of the portions within each of the depths of field 110a-c. For example, the computing device 113 may process and combine together the first image, the second image, and the third image to generate the combined image representative of the first portion, the second portion, and the third portion of the sample 108. The computing device 113 may use the combined image to extract the `omics information corresponding to the sample 108.

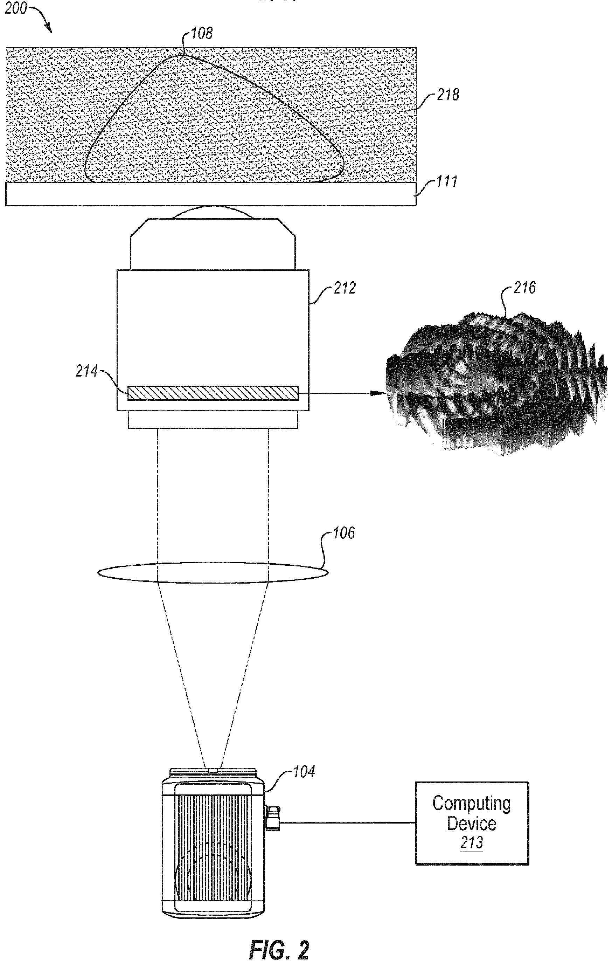

FIG. 2 illustrates another example optical system 200 that includes an objective lens 212 that includes an optical element 214, in accordance with at least one embodiment described in the present disclosure. The optical system 200 may be configured to extract `omics information corresponding to the sample 108 within an extended depth of field 218. In addition, the optical system 200 may be configured to improve throughput of imaging or analysis of spatial `omics assays of the sample 108. The optical system 200 may include the objective lens 212, the camera 104, the tube lens 106, the dish 111, and a computing device 213.

The optical element 214 may include a non-traditional optics device (e.g., a non-traditional optics dielectric phase mask), which may be placed in an optical path of the optical system 200. In addition, the optical element 214 may comprise a passive device with a fixed alignment.

The optical element 214 may be optically coupled to a back focal plane of the objective lens 212. The optical element 214 may extend the depth of field defined by the objective lens 212, maintain an image resolution defined by the objective lens 212, substantially maintain light throughput, or some combination thereof to permit the camera 104 to capture an image representative of the sample within the extended depth of field. The extended depth of field 218 may be greater than the depth of field defined just by the objective lens 212. In some embodiments, the optical element 214 may generally maintain ninety-eight, or greater, percent of light throughput. In these and other embodiments, the optical element 214 may generally maintain ninety percent or greater of the image resolution.

Light rays from the sample 108 may traverse the dish 111, the objective lens 212, the optical element 214, and the tube lens 106 and be captured by the camera sensor within the camera 104 as an image. The light rays from the sample 108 may include reflected light rays, transmitted light rays, fluorescence light rays, and/or other light rays which may be used to image the sample 108. As illustrated in FIG. 2, the extended depth of field 218 may be equal to or greater than the axial dimension of the sample 108 and greater than the depths of field 1 10a-c of FIG. 1. Thus, the optical system 200 may not need to perform axial scanning. Instead, the camera 104 may capture an image representative of the entire sample 108 during a single step.

Characteristics of the image captured by the camera 104 may be based on the image resolution, the magnification, the lateral field of view, the depth of field, or other aspects defined by the objective lens 212, the optical element 214, or some combination thereof.

The optical element 214 may include a phase mask optically coupled to the back focal plane of the objective lens 212. An example phase mask 216 is illustrated in FIG. 2. The phase mask may include a diffractive phase mask, a refractive phase mask, a dielectric phase mask, or some combination thereof. The phase mask may be optically transparent, photon efficient, or some combination thereof. The phase mask may modify the PSF of the objective lens 212.

The objective lens 212 is illustrated in FIG. 2 as housing (e.g., including) the optical element 214 for exemplary purposes. In other embodiments, the optical element 214 may include a device that is separate (e.g., a separate optical imaging device) from the objective lens 212. For example, the optical element 214 may include a device configured to interface with (e.g., optically couple or physically attach to) an exterior of an objective lens (e.g., the objective lens 102 of FIG. 1). In some embodiments, a form factor of the optical element 214 may be equal to or smaller than a form factor of a back aperture or the back focal plane of a microscope objective lens.

The optical element 214 may be designed based on physics of PSF engineering matched to the objective lens 212, the sample 108, 'omics problems, or some combination thereof. For example, the optical element 214 may be designed based on the physics of PSF engineering matched to characteristics of the objective lens 212, a thickness of the sample 108, a density of sub-cellular components within the sample 108, or some combination thereof.

The optical element 214 may also be designed based on the physics of PSF engineering in conjunction with a computational recovery algorithm that is matched to the objective lens 212, the sample 108, 'omics problems, or some combination thereof.

The computing device 213 may receive the image representative of the sample 108 within the extended depth of field 218 captured by the camera 104. The computing device 213 may apply the computational recovery algorithm to process the image and extract the `omics information corresponding to the sample 108. The 'omics information may include locations of the sub-cellular components, interactions of the sub-cellular components, counts of the sub-cellular components, densities of the sub-cellular components, clusters of the sub-cellular components, chromaticity of the sub-cellular components, brightness of the sub-cellular components, colocations of the sub-cellular components, trajectories of the sub-cellular components, velocity of the sub-cellular components, or some combination thereof. Additionally or alternatively, the `omics information may include locations of cellular components, interactions of the cellular components, counts of the cellular components, densities of the cellular components, clusters of the cellular components, chromaticity of the cellular components, brightness of the cellular components, colocations of the cellular components, trajectories of the cellular components, velocity of the cellular components, or some combination thereof. Further, the `omics information may include locations of tissue components, interactions of the tissue components, counts of the tissue components, densities of the tissue components, clusters of the tissue components, chromaticity of the tissue components, brightness of the tissue components, colocations of the tissue components, trajectories of the tissue components, velocity of the tissue components, or some combination thereof. The computational recovery algorithm may include identifying clusters of overlapping signal emissions representative of different tissue, cellular, or sub-cellular components within the image, fitting the clustered signals simultaneously, and fitting a variant background beneath each cluster of signal emissions.

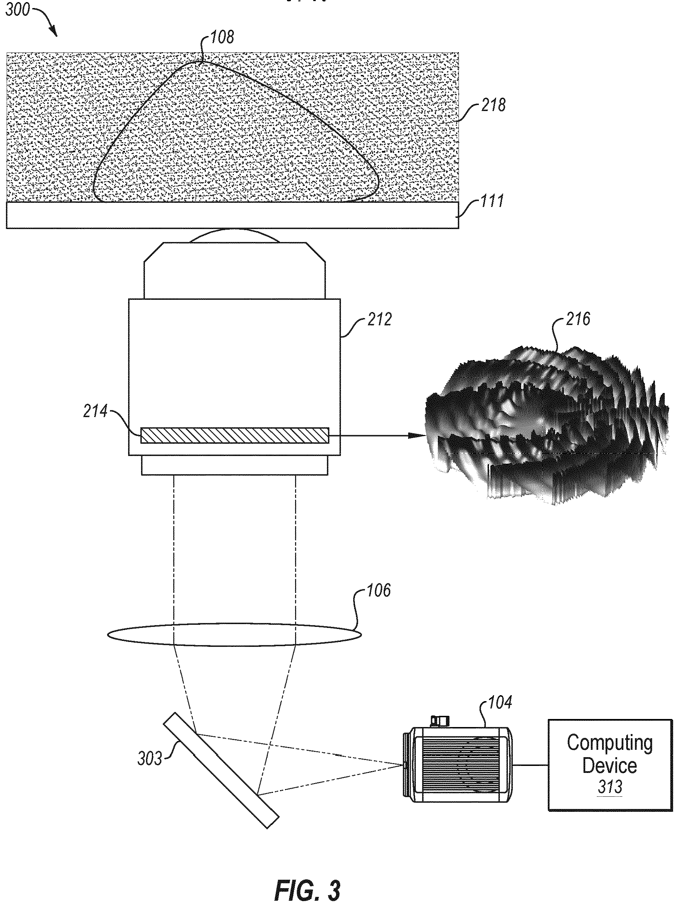

FIG. 3 illustrates yet another example optical system 300 that includes the objective lens 212 that includes the optical element 214, in accordance with at least one embodiment described in the present disclosure. The optical system 300 may be configured to extract 'omics information corresponding to the sample 108 within the extended depth of field 218. The optical system 300 may be configured to extract `omics information corresponding to the sample 108 within an extended depth of field 218. In addition, the optical system 200 may be configured to improve throughput of imaging or analysis of spatial `omics assays of the sample 108. The optical system 300 may include the objective lens 212, the camera 104, the tube lens 106, the dish 111, a reflector 303, and a computing device 313.

The light rays from the tube lens 106 may be re-directed by the reflector 303 and captured by the camera sensor within the camera 104 as an image. The camera 104 may capture the image representative of the entire sample 108 during a single step.

The computing device 313 may receive the image representative of the sample 108 within the extended depth of field 218 captured by the camera 104. The computing device 313 may apply the computational recovery algorithm to process the image and extract the `omics information corresponding to the sample 108. The 'omics information may include locations of the sub-cellular components, interactions of the sub-cellular components, counts of sub-cellular components, densities of the sub-cellular components, clusters of the sub-cellular components, chromaticity of the sub-cellular components, brightness of the sub-cellular components, colocations of the sub-cellular components, trajectories of the sub-cellular components, velocity of the sub-cellular components, or some combination thereof. Additionally or alternatively, the `omics information may include locations of cellular components, interactions of the cellular components, counts of the cellular components, densities of the cellular components, clusters of the cellular components, chromaticity of the cellular components, brightness of the cellular components, colocations of the cellular components, trajectories of the cellular components, velocity of the cellular components, or some combination thereof. Further, the `omics information may include locations of tissue components, interactions of the tissue components, counts of the tissue components, densities of the tissue components, clusters of the tissue components, chromaticity of the tissue components, brightness of the tissue components, colocations of the tissue components, trajectories of the tissue components, velocity of the tissue components, or some combination thereof. The computational recovery algorithm may include identifying clusters of overlapping signal emissions representative of different tissue, cellular, or sub-cellular components within the image, fitting the clustered signals simultaneously, and fitting a variant background beneath each cluster of signal emissions.

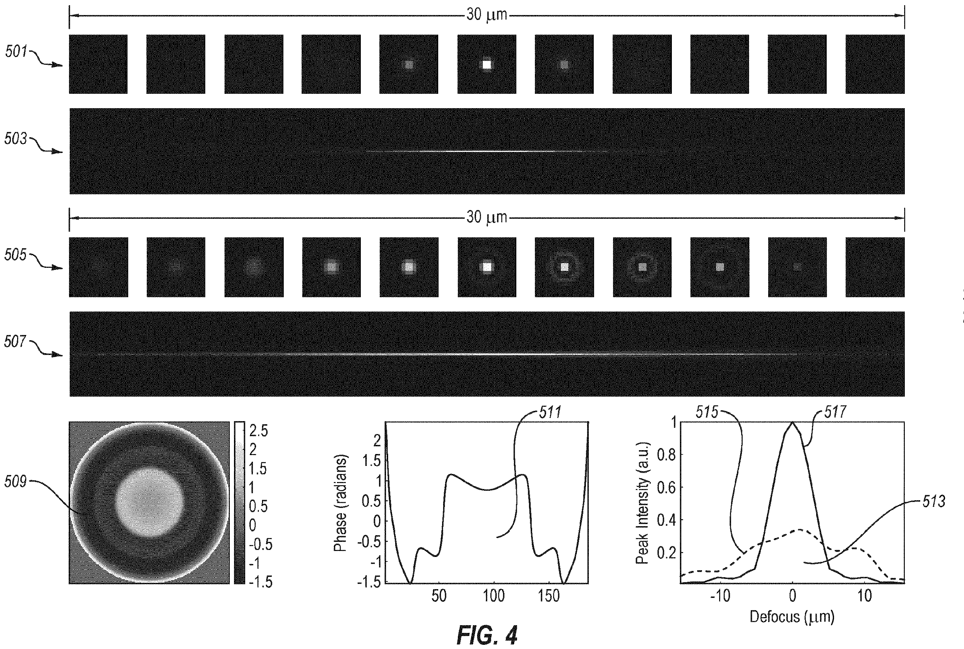

FIG. 4 illustrates graphical representations 501, 503, 505, and 507 of simulations of the PSF of an optical system that included the optical element 214 of FIGS. 2 and 3 and an optical system that did not include the optical element 214 of FIGS. 2 and 3, in accordance with at least one embodiment described in the present disclosure. The simulations were performed using an optical system that included a 20x/0.45NA objective lens (e.g., the optical system that does not include the optical element) and using an optical system that included an engineered PSF optical element designed for the 20x/0.45NA objective lens (e.g., the optical system that includes the optical element). The optical element for the simulation was designed to extend the depth of field by a factor of roughly three times.

The graphical representation 501 illustrates a conventional lateral or an XY PSF of the optical system that did not include the optical element. The graphical representation 503 illustrates an XZ cross section of the conventional PSF of the optical system that did not include the optical element. The graphical representation 505 illustrates a DF lateral or XY PSF of the optical system that included the optical element. The graphical representation 507 illustrates an XZ cross section of the DF PSF of the optical system that included the optical element.

The graphical representation 501 illustrates the conventional lateral or XY PSF as a function of defocus of the optical system that did not include the optical element. The graphical representation 505 illustrate the DF lateral or XY PSF normalized to a brightest PSF at the original focal plane of the optical system that included the optical element. The graphical representation 507 of the XZ cross section of the DF PSF compared to the graphical representation 503 of the XZ cross section of the conventional PSF shows an extension in the depth of field of the optical system that included the optical element compared to the optical system that did not include the optical element.

A graphical representation 509 of a phase mask of the optical element used for the simulations is illustrated in FIG. 4. The phase mask included a circularly symmetric pattern that generally maintained the circular symmetry of the PSF. A graphical representation 511 of a line profile across a center of the phase mask is also illustrated in FIG. 4. A graphical representation of 513 of a peak intensity of the conventional PSF compared to the peak intensity of the DF-PSF over the desired depth range is illustrated in FIG. 4. In the graphical representation 513, curve 515 represents the peak intensity of the DF-PSF and curve 517 represents the peak intensity of the conventional PSF. As shown in the graphical representation 513, the peak intensity of the DF-PSF was significantly flattened compared to the peak intensity of the conventional PSF during the simulations.

The optical system that included the optical element extended the depth of field to roughly twenty-one µm while generally maintaining a high image resolution (e.g., a lower PSF footprint). As illustrated in the graphical representation 513, due to conservation of energy, extending the depth of field resulted in a drop in the peak intensity of the PSF. In the simulations, the peak intensity of the optical system that included the optical element at focus was about one third the peak intensity of the optical system that did not include the optical element, which shows that energy was conserved with minimal losses to side lobes. However, away from focus, the peak intensity of the optical system that included the optical element was higher than the optical system that did not include the optical element which resulted in a higher signal to noise ratio (SNR), a greater depth of field, or some combination thereof.

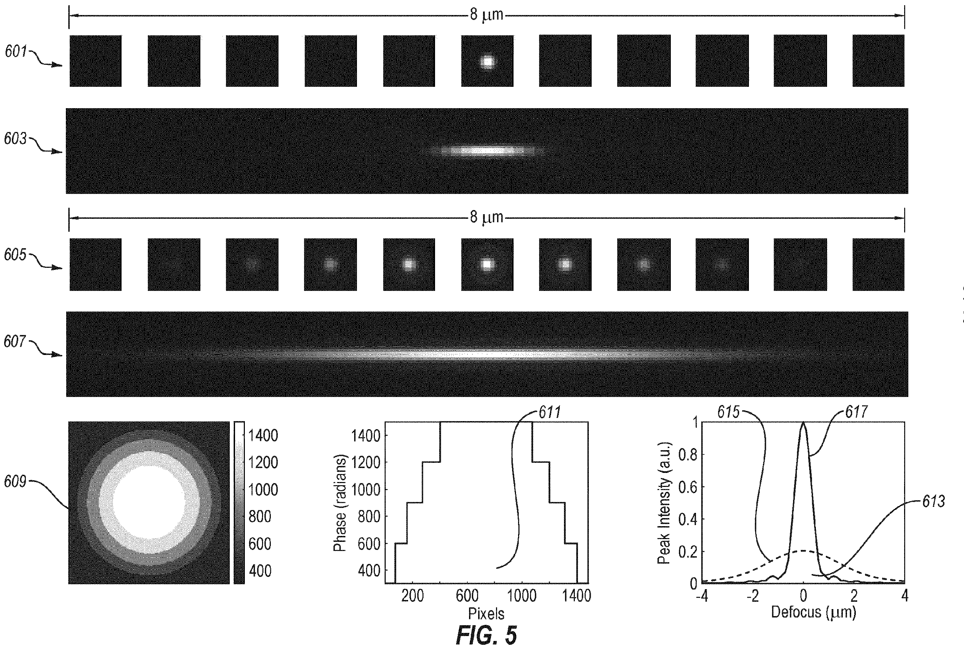

FIG. 5 illustrates graphical representations 601, 603, 605, and 607 of more simulations of the PSF of an optical system that included the optical element 214 of FIGS. 2 and 3 and an optical system that did not include the optical element 214 of FIGS. 2 and 3, in accordance with at least one embodiment described in the present disclosure. The simulations were performed using an optical system that included a 40x/0.95NA objective lens (e.g., the optical system that does not include the optical element) and using an optical system that included an engineered PSF optical element designed for the 40x/0.95NA objective lens (e.g., the optical system that included the optical element). The optical element for the simulation was designed to extend the depth of field by a factor of roughly five times.

The graphical representation 601 illustrates a conventional lateral or XY PSF of the optical system that did not include the optical element. The graphical representation 603 illustrates an XZ cross section of the conventional PSF of the optical system that did not include the optical element. The graphical representation 605 illustrates a DF lateral or XY PSF of the optical system that included the optical element. The graphical representation 607 illustrates an XZ cross section of the DF PSF of the optical system that included the optical element.

The graphical representation 601 illustrate the conventional lateral or XY PSF as a function of defocus of the optical system that did not include the optical element. The graphical representation 605 illustrate the DF lateral or XY PSF normalized to a brightest PSF at the original focal plane of the optical system that included the optical element. The graphical representation 607 of the XZ cross section of the DF PSF compared to the graphical representation 603 of the XZ cross section of the conventional PSF shows an extension in the depth of field in the optical system that included the optical element compared to the optical system that did not include the optical element.

A graphical representation 609 of a phase mask of the optical element used for the simulations is illustrated in FIG. 5. The phase mask included concentric pillars of optically transparent material with each pillar about three hundred µm taller than the next and included a circularly symmetric pattern. A graphical representation 611 of a line profile across a center of the phase mask is also illustrated in FIG. 5. A graphical representation 613 of a peak intensity of the conventional PSF compared to the peak intensity of the DF-PSF over the desired depth range is illustrated in FIG. 5. In the graphical representation 613, curve 615 represents the peak intensity of the DF-PSF and curve 617 represents the peak intensity of the conventional PSF. As shown in the graphical representation 613, the peak intensity of the DF-PSF was significantly flattened compared to the peak intensity of the conventional PSF during the simulations.

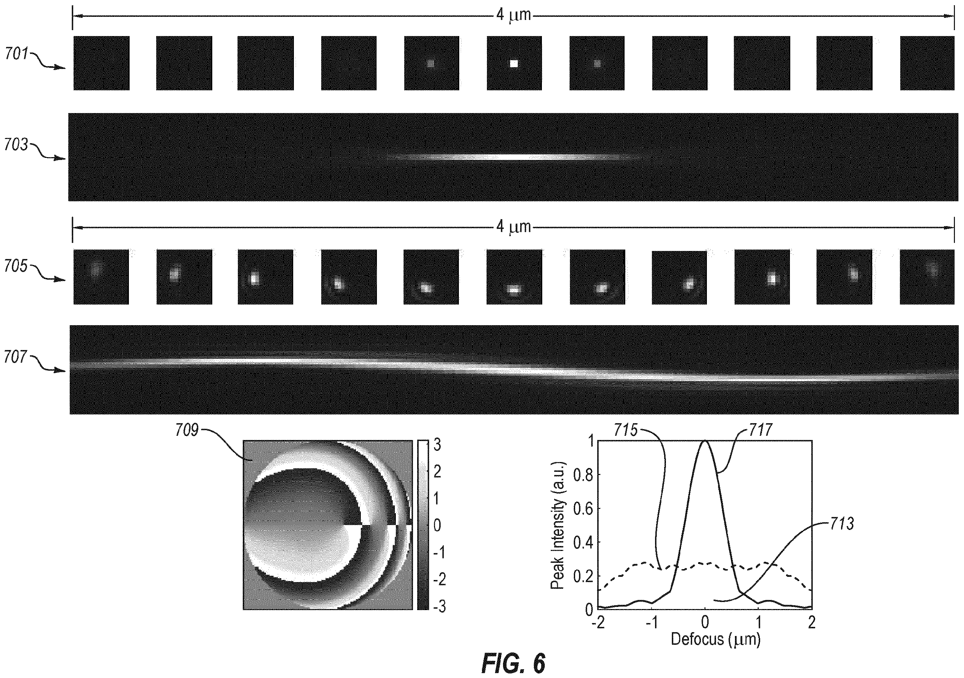

FIG. 6 illustrates graphical representations 701, 703, 705, and 707 of even more simulations of the PSF of an optical system that included the optical element 214 of FIGS. 2 and 3 and an optical system that did not include the optical element 214 of FIGS. 2 and 3, in accordance with at least one embodiment described in the present disclosure. The simulations were performed using an optical system that included an objective lens (e.g., the optical system that does not include the optical element) and using an optical system that included an engineered PSF optical element designed for the objective lens (e.g., the optical system that includes the optical element). The optical element for the simulation was designed to extend the depth of field by a factor of roughly eight times.

The graphical representation 701 illustrates a conventional lateral or XY PSF of the optical system that did not include the optical element. The graphical representation 703 illustrates an XZ cross section of the conventional PSF of the optical system that did not include the optical element. The graphical representation 705 illustrates a DF lateral or XY PSF of the optical system that included the optical element. The graphical representation 707 illustrates an XZ cross section of the DF PSF of the optical system that included the optical element.

The graphical representation 701 illustrates the conventional lateral or XY PSF as a function of defocus of the optical system that did not include the optical element. The graphical representation 705 illustrates the DF lateral or XY PSF normalized to a brightest PSF at the original focal plane of the optical system that included the optical element. The graphical representation 707 of the XZ cross section of DF PSF compared to the graphical representation 703 of the XZ cross section of the conventional PSF shows an extension in the depth of field in the optical system that included the optical element compared to the optical system that did not include the optical element.

A graphical representation 709 of a phase mask of the optical element used for the simulations is illustrated in FIG. 6. The phase mask included a non-circularly symmetric pattern. A graphical representation 713 of a peak intensity of the conventional PSF compared to the peak intensity of the DF-PSF over the depth range is illustrated in FIG. 6. In the graphical representation 713, curve 715 represents the peak intensity of the DF-PSF and curve 717 represents the peak intensity of the conventional PSF. As shown in the graphical representation 713, the peak intensity of the DF-PSF is significantly flattened compared to the peak intensity of the conventional PSF during the simulations.

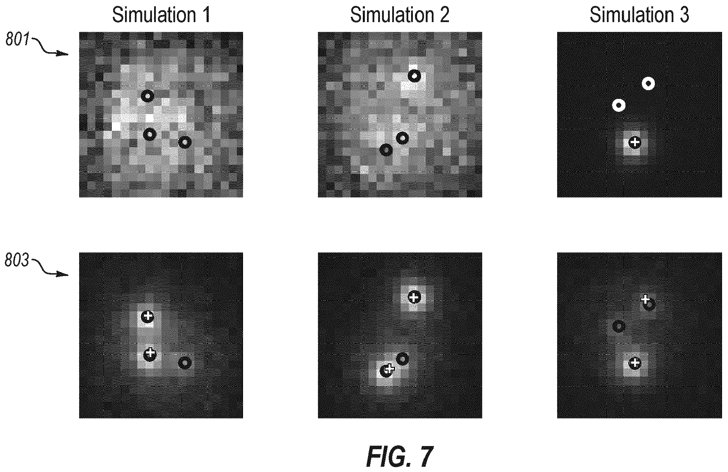

FIG. 7 illustrates graphical representations 801 of images captured by a microscope that did not include the optical element 214 of FIGS. 2 and 3 and graphical representations 803 of simulations using a microscope that included the optical element 214 of FIGS. 2 and 3, in accordance with at least one embodiment described in the present disclosure. For the simulations, three sub-cellular components (e.g., puncta/mRNA) were distributed within a sample volume of one X one X three µm and imaged using a 40x/0.95NA objective lens. The depth of field of the objective lens was equal to roughly 0.8 µm.

The simulations were performed based on single molecule fluorescence in-situ hybridization (smFISH) image data. smFISH may be used to study gene expression in cells and tissues by counting individual mRNA molecules. In smFISH imaging experiments, individual molecules may be pinpointed by locating a center of an emission signal of each molecule. However, since the tissue, cellular, or sub-cellular components (e.g., MRNA) are distributed throughout the volume of the sample, the limited depth of field of the microscope that did not include the optical element may cause the components to be out of focus, which may lead to increased background blur and misidentification, misclassification, or miscounting the components.

In the graphical representations 801 and 803, ground truths of the tissue, cellular, or sub-cellular components are illustrated as circles and detected positions of the components are illustrated as plus signs. As illustrated in the graphical representations 801 of the simulations of the microscope that did not include the optical element, in all but one of the simulations, all of the components were out of focus and not detected due to the relatively small depth of field. In simulation 3 using the microscope that did not include the optical element, one out of three of the components was in focus and was detected. However, as illustrated in the graphical representations 803 of the simulations of the microscope that included the optical element, three out of three components were in focus and two out of three components were detected for each of the simulations due to the extended depth of field.

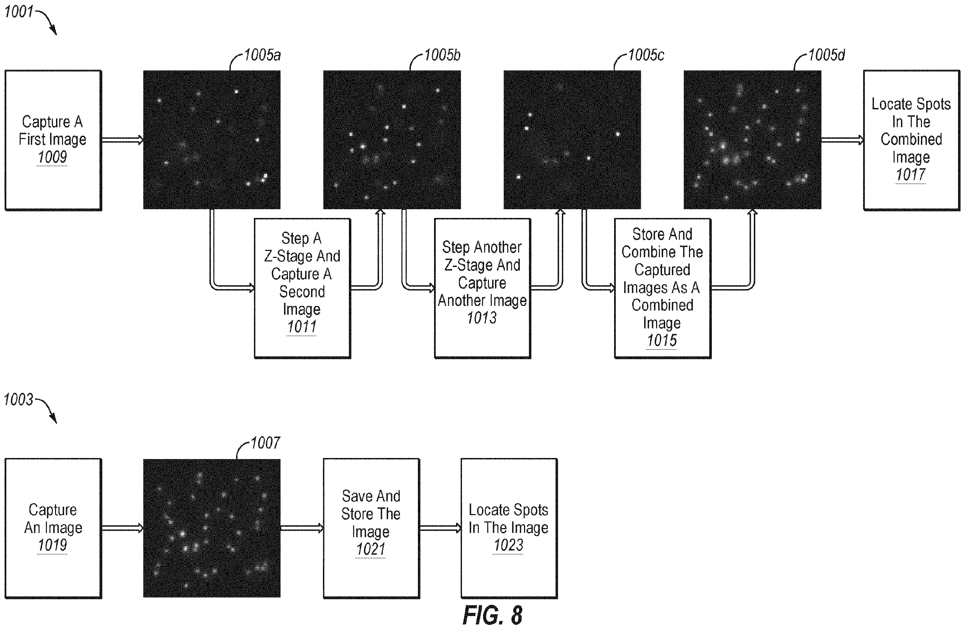

FIG. 8 illustrates flowcharts of a workflow 1001 and images 1005a-d captured or generated using a standard objective lens and a workflow 1003 and an image 1007 captured using a DF objective lens, in accordance with at least one embodiment described in the present disclosure. Both of the workflows 1001 and 1003 may be applied to spatial 'omics data recovery.

The workflow 1001 illustrates the workflow and the images 1005a-d captured or generated using the standard objective lens. The workflow 1001 may include one or more blocks 1009, 1011, 1013, 1015, or 1017. At block 1009, a first image 1005a may be captured. At block 1011, a Z-stage may be stepped and a second image 1005b may be captured. At block 1013, another Z-stage may be stepped and another image 1005c may be captured. The workflow 1001 may repeat block 1013 to capture N images. At block 1015, the images 1005a-c may be stored and combined as a combined image 1005d (e.g., an N-slice maximum intensity projection (MIP)). At block 1017, spots in the combined image 1005d may be located. As illustrated in FIG. 8, the standard objective lens uses the multiple images 1005a-c over multiple Z-stage steps to fully capture data within a biological sample (e.g., RNA in tissue samples) in the combined image 1005d.

The workflow 1003 illustrates the workflow and the image 1007 captured using the DF objective lens. The workflow 1003 may include one or more blocks 1019, 1021, or 1023. At block 1019, the image 1007 may be captured. At block 1021, the image 1007 may be saved and stored. At block 1023, spots in the image 1007 may be located. As illustrated in FIG. 8, the DF objective lens may permit image data recovery using the single image 1007 throughout a full thickness of a sample, improving throughput and reducing system complexity.

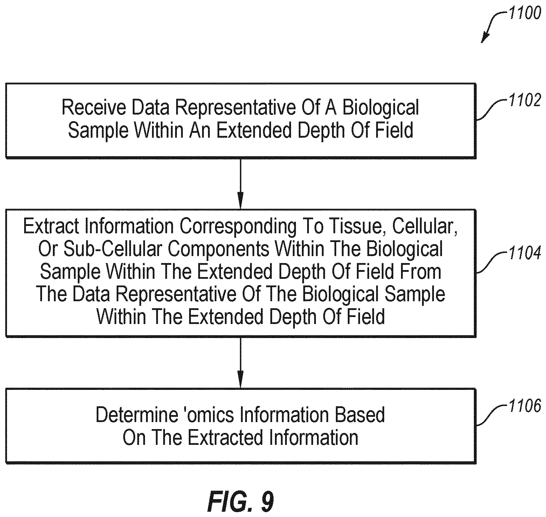

FIG. 9 illustrates a flowchart of an example method 1100 of determining 'omics information of tissue, cellular, or sub-cellular components, in accordance with at least one embodiment described in the present disclosure. The method 1100 may be performed by any suitable system, apparatus, or device with respect to determining `omics information of the components. For example, the computing device 213 or 313 of FIGS. 2 or 3 may perform or direct performance of one or more of the operations associated with the method 1100. The method 1100 may include one or more blocks 1102, 1104, or 1106. Although illustrated with discrete blocks, the steps and operations associated with one or more of the blocks of the method 1100 may be divided into additional blocks, combined into fewer blocks, or eliminated, depending on the particular implementation.

At block 1102, data representative of a biological sample within an extended depth of field may be received. At block 1104, information corresponding to tissue, cellular, or sub-cellular components within the biological sample within the extended depth of field from the data representative of the biological sample within the extended depth of field may be extracted. At block 1106, 'omics information based on the extracted information may be determined.

Modifications, additions, or omissions may be made to the method 1100 without departing from the scope of the present disclosure. For example, the operations of method 1100 may be implemented in differing order. Additionally or alternatively, two or more operations may be performed at the same time. Furthermore, the outlined operations and actions are only provided as examples, and some of the operations and actions may be optional, combined into fewer operations and actions, or expanded into additional operations and actions without detracting from the essence of the described embodiments.

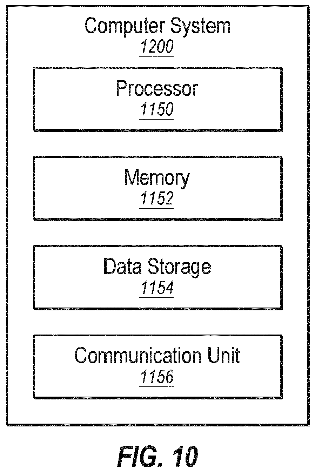

FIG. 10 illustrates a block diagram of an example computing system 1200, according to at least one embodiment of the present disclosure. The computing system 1200 may be configured to implement or direct one or more operations associated with a system (e.g., the optical systems 100, 200, and/or 300 of FIGS. 1-3) and/or a computing device (e.g., the computing devices 113, 213, and/or 313 of FIGS. 1-3). The computing system 1200 may include a processor 1150, a memory 1152, a data storage 1154, and a communication unit 1156. The processor 1150, the memory 1152, the data storage 1154, and the communication unit 1156 may be communicatively coupled.

In general, the processor 1150 may include any suitable special-purpose or general-purpose computer, computing entity, or processing device including various computer hardware or software modules and may be configured to execute instructions stored on any applicable computer-readable storage media. For example, the processor 1150 may include a microprocessor, a microcontroller, a digital signal processor (DSP), an application-specific integrated circuit (ASIC), a Field-Programmable Gate Array (FPGA), or any other digital or analog circuitry configured to interpret and/or to execute program instructions and/or to process data. Although illustrated as a single processor in FIG. 10, the processor 1150 may include any number of processors configured to, individually or collectively, perform or direct performance of any number of operations described in the present disclosure. Additionally, one or more of the processors may be present on one or more different electronic devices, such as different servers.

In some embodiments, the processor 1150 may be configured to interpret and/or execute program instructions and/or process data stored in the memory 1152, the data storage 1154, or the memory 1152 and the data storage 1154. In some embodiments, the processor 1150 may fetch program instructions from the data storage 1154 and load the program instructions in the memory 1152. After the program instructions are loaded into memory 1152, the processor 1150 may execute the program instructions.

The processor 1150 may fetch the program instructions from the data storage 1154 and may load the program instructions in the memory 1152. After the program instructions are loaded into memory 1152, the processor 1150 may execute the program instructions such that the computing system 1200 may implement the operations as directed by the instructions.

The memory 1152 and the data storage 1154 may include computer-readable storage media for carrying or having computer-executable instructions or data structures stored thereon. Such computer-readable storage media may include any available media that may be accessed by a general-purpose or special-purpose computer, such as the processor 1150. By way of example, and not limitation, such computer-readable storage media may include tangible or non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store particular program code in the form of computer-executable instructions or data structures and which may be accessed by a general-purpose or special-purpose computer. Combinations of the above may also be included within the scope of computer-readable storage media. Computer-executable instructions may include, for example, instructions and data configured to cause the processor 1150 to perform a certain operation or group of operations.

The communication unit 1156 may include any component, device, system, or combination thereof that is configured to transmit or receive information over a network. In some embodiments, the communication unit 1156 may communicate with other devices at other locations, the same location, or even other components within the same system. For example, the communication unit 1156 may include a modem, a network card (wireless or wired), an infrared communication device, a wireless communication device (such as an antenna), and/or chipset (such as a Bluetooth^{®} device, an 802.6 device (e.g., Metropolitan Area Network (MAN)), a WiFi device, a WiMax device, cellular communication facilities, etc.), and/or the like. The communication unit 1156 may permit data to be exchanged with a network and/or any other devices or systems described in the present disclosure.

Modifications, additions, or omissions may be made to the computing system 1200 without departing from the scope of the present disclosure. For example, in some embodiments, the computing system 1200 may include any number of other components that may not be explicitly illustrated or described.

Terms used in the present disclosure and especially in the appended claims (e.g., bodies of the appended claims) are generally intended as "open terms" (e.g., the term "including" should be interpreted as "including, but not limited to.").

Additionally, if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to embodiments containing only one such recitation, even when the same claim includes the introductory phrases "one or more" or "at least one" and indefinite articles such as "a" or "an" (e.g., "a" and/or "an" should be interpreted to mean "at least one" or "one or more"); the same holds true for the use of definite articles used to introduce claim recitations.

In addition, even if a specific number of an introduced claim recitation is expressly recited, those skilled in the art will recognize that such recitation should be interpreted to mean at least the recited number (e.g., the bare recitation of "two recitations," without other modifiers, means at least two recitations, or two or more recitations). Furthermore, in those instances where a convention analogous to "at least one of A, B, and C, etc." or "one or more of A, B, and C, etc." is used, in general such a construction is intended to include A alone, B alone, C alone, A and B together, A and C together, B and C together, or A, B, and C together, etc.

Further, any disjunctive word or phrase preceding two or more alternative terms, whether in the description, claims, or drawings, should be understood to contemplate the possibilities of including one of the terms, either of the terms, or both of the terms. For example, the phrase "A or B" should be understood to include the possibilities of "A" or "B" or "A and B."

All examples and conditional language recited in the present disclosure are intended for pedagogical objects to aid the reader in understanding the present disclosure and the concepts contributed by the inventor to furthering the art, and are to be construed as being without limitation to such specifically recited examples and conditions. Although embodiments of the present disclosure have been described in detail, various changes, substitutions, and alterations could be made hereto without departing from the spirit and scope of the present disclosure.

Embodiments described in the present disclosure may be implemented using computer-readable media for carrying or having computer-executable instructions or data structures stored thereon. Such computer-readable media may be any available media that may be accessed by a general-purpose or special purpose computer. By way of example, and not limitation, such computer-readable media may include non-transitory computer-readable storage media including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices), or any other storage medium which may be used to carry or store desired program code in the form of computer-executable instructions or data structures and which may be accessed by a general-purpose or special purpose computer. Combinations of the above may also be included within the scope of computer-readable media.

Computer-executable instructions may include, for example, instructions and data, which cause a general-purpose computer, special purpose computer, or special purpose processing device (e.g., one or more processors) to perform a certain function or group of functions. Although the subject matter has been described in language specific to structural features and/or methodological acts, it is to be understood that the subject matter defined in the appended claims is not necessarily limited to the specific features or acts described above. Rather, the specific features and acts described above are described as example forms of implementing the claims.

When used in this specification and claims, the terms "comprises" and "comprising" and variations thereof mean that the specified features, steps or integers are included. The terms are not to be interpreted to exclude the presence of other features, steps or components.

The invention may also broadly consist in the parts, elements, steps, examples and/or features referred to or indicated in the specification individually or collectively in any and all combinations of two or more said parts, elements, steps, examples and/or features. In particular, one or more features in any of the embodiments described herein may be combined with one or more features from any other embodiment(s) described herein.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

## Claims

1. An optical system comprising:
an objective lens comprising a back focal plane;
a camera configured to capture an image representative of a biological sample; and
an optical element optically coupled to the back focal plane, the optical element configured to extend a depth of field defined by the objective lens and maintain light throughput to permit the camera to capture the image representative of the biological sample within the extended depth of field.

2. The optical system of claim 1 further comprising a computing device communicatively coupled to the camera, the computing device configured to determine a location of tissue, cellular, or sub-cellular components within the biological sample, count a number of the components within the biological sample, or determine interactions of the components within the biological sample based on the image representative of the biological sample within the extended depth of field.

3. The optical system of claim 1 or claim 2, wherein the optical element comprises a non-traditional optics dielectric phase mask configured to modify a point spread function (PSF) of the optical system.

4. The optical system of any preceding claim, wherein the optical element is housed within the objective lens or comprises a separate device physically attached to the objective lens.

5. The optical system of any preceding claim, wherein the optical element is configured to cause the extended depth of field to be greater than the depth of field defined by the objective lens; and / or
wherein the optical element comprises a passive device with a fixed alignment.

6. The optical system of any preceding claim when dependent, directly or indirectly, on claim 2, wherein the optical element comprises a device that is based on at least one of the objective lens, a thickness of the biological sample, or a density of the tissue, cellular, or sub-cellular components within the biological sample; and / or
wherein the computing device is configured to maintain or improve an image resolution defined by the objective lens.

7. The optical system of any preceding claim, wherein the optical system is configured to improve throughput of imaging or analysis of spatial 'omics sciences.

8. The optical system of any preceding claim, further comprising:
a tube lens configured to permit light from the biological sample to traverse the tube lens; and
a reflector configured to re-direct light rays from the tube lens to the camera.

9. A system comprising:
one or more computer-readable storage media configured to store instructions; and
one or more processors communicatively coupled to the one or more computer-readable storage media and configured to, in response to execution of the instructions, cause the system to perform operations, the operations comprising:
receiving data representative of a biological sample within an extended depth of field;
extracting information corresponding to tissue, cellular, or sub-cellular components within the biological sample within the extended depth of field from the data representative of the biological sample within the extended depth of field; and
determining `omics information of the tissue, cellular, or sub-cellular components based on the extracted information.

10. The system of claim 9, wherein the operation extracting the information corresponding to the tissue, cellular, or sub-cellular components comprises at least one of:
extracting a location of the components within the biological sample within the extended depth of field from the data representative of the biological sample within the extended depth of field;
extracting a number of the components within the biological sample within the extended depth of field from the data representative of the biological sample within the extended depth of field; or
extracting interactions of the components within the biological sample within the extended depth of field from the data representative of the biological sample within the extended depth of field.

11. The system of claim 10, wherein:
the data representative of the biological sample within the extended depth of field comprises a single image representative of the biological sample within the extended depth of field; and
at least one of the locations of the tissue, cellular, or sub-cellular components, the number of the components, or the interactions of the components are extracted from the single image representative of the biological sample within the extended depth of field.

12. The system of any one of claims 9 to 11, wherein the `omics information comprises at least one of locations of the tissue, cellular, or sub-cellular components, interactions of the components, a number of the components, densities of the components, clusters of the components, chromaticity of the components, brightness of the components, colocations of the components, trajectories of the components, or velocity of the components; and / or
wherein the extended depth of field is defined by an objective lens and an optical element optically coupled to a back focal plane of the objective lens.

13. A method comprising:
receiving data representative of a biological sample within an extended depth of field;
extracting information corresponding to tissue, cellular, or sub-cellular components within the biological sample within the extended depth of field from the data representative of the biological sample within the extended depth of field; and
determining `omics information based on the extracted information.

14. The method of claim 13, wherein extracting the information corresponding to the tissue, cellular, or sub-cellular components comprises at least one of:
extracting a location of the components within the biological sample within the extended depth of field from the data representative of the biological sample within the extended depth of field;
extracting a number of the components within the biological sample within the extended depth of field from the data representative of the biological sample within the extended depth of field; or
extracting interactions of the components within the biological sample within the extended depth of field from the data representative of the biological sample within the extended depth of field; optionally
wherein:
the data representative of the biological sample within the extended depth of field comprises a single image representative of the biological sample within the extended depth of field; and
at least one of the location of the tissue, cellular, or sub-cellular components, the number of the components, or the interactions of the components are extracted from the single image representative of the biological sample within the extended depth of field.

15. The method of claim 13 or claim 14, wherein the 'omics information comprises at least one of locations of the tissue, cellular, or sub-cellular components, interactions of the components, densities of the components, clusters of the components, chromaticity of the components, brightness of the components, colocations of the components, trajectories of the components, or velocity of the components; and / or
wherein the extended depth of field is defined by an objective lens and an optical element optically coupled to a back focal plane of the objective lens.
